# EUROPÄISCHE PATENTSCHRIFT

(11) **EP 1 026 465 B1**
(45) Veröffentlichungstag und Bekanntmachung des Hinweises auf die Patenterteilung: **21.04.2004**
(21) Anmeldenummer: 00101554.4
(22) Anmeldetag: 27.01.2000
(51) Int. Cl.: F27B 7/20, C04B 7/43

(54) **Anlage zur thermischen Behandlung von mehlförmigen Rohmaterialien**
Installation for the heat treatment of raw fines
Installation pour le traitement thermique de matières premières en poudre

(30) Priorität: 02.02.1999 DE 19903954
(43) Veröffentlichungstag der Anmeldung: 09.08.2000
(73) Patentinhaber: KHD Humboldt-Wedag AG, 51103 Köln (DE)
(72) Erfinder: Ramesohl, Hubert, 51427 Bergisch Gladbach (DE); Kuhnke, Stephan, Dr., 50374 Erftstadt (DE); Hand, Andreas, 51103 Köln (DE); Brachthäuser, Michael, 41542 Dormagen (DE)

(56) Entgegenhaltungen:
- EP-A- 0 048 537
- EP-A- 0 103 423
- FR-A- 2 221 416
- FR-A- 2 659 134
- US-A- 3 881 862
- PATENT ABSTRACTS OF JAPAN vol. 10, no. 219 (C-363) [2275], 31. Juli 1986 (1986-07-31) & JP 61 057232 A (KOBE STEEL LTD), 24. März 1986 (1986-03-24)

## Beschreibung

Die Erfindung betrifft eine Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der Weise in der Calcinierstufe zur Calcination des Rohmehls genutzt werden, daß sowohl im Drehofenabgaskanal als auch im Tertiärluftkanal wenigstens eine Brennstelle vorhanden ist, wobei die aus beiden Kanälen kommende Gas-Rohmehl-Brennstoff-Suspension in der Calcinierstufe umgelenkt und in den untersten Zyklon des Zyklonschwebegas-Vorwärmersystems zwecks Abtrennung des calcinierten Rohmehls vom Gasstrom eingeführt wird.

Anlagen zur Herstellung von Zementklinker aus Rohmehl der oben beschriebenen Art mit einer dem Drehrohrofen vorgeschalteten, mit Zweitfeuerungen ausgestatteten Calcinierstufen müssen in der Lage sein, ein hochgradig calciniertes Rohmehl vor Einführung in den Drehrohrofen zu erzeugen. Gleichzeitig werden die Erbauer und Betreiber von Zementklinkerproduktionslinien mit immer schärferen Forderungen nach niedrigen Emissionswerten bei Schadstoffen wie NOₓ und CO konfrontiert.

Zur Reduzierung solcher Schadstoffemissionen ist es bei Zementklinkerproduktionsanlagen der eingangs genannten Art (z. B. EP-B-0 222 044 sowie EP-B-0 526 770) bekannt, in der Drehofenabgassteigleitung Brennstoff unterstöchiometrisch, d. h. mit Sauerstoffunterschuß zu verbrennen zwecks Schaffung einer CO-haltigen Reduktionszone zur Reduktion des Schadstoffes NOₓ, der insbesondere durch die Hochtemperaturverbrennung im Drehrohrofen gebildet worden ist (thermisches NOₓ). Im benachbarten sogenannten Tertiärluftkanal, durch den ein Anteil der heißen Klinkerkühlerabluft hindurchgeführt wird, wird Brennstoff überstöchiometrisch, d. h. mit Sauerstoffüberschuß verbrannt. Die bei der Brennstoffverbrennung frei werdende Wärme wird in jedem Fall zur Calcination des Rohmehls genutzt. Suspensionsströmungsabwärts gesehen wird dann das in der NOₓ-Reduktionszone des Drehofenabgaskanales nicht verbrauchte CO mittels überschüssigen Sauerstoffs aus dem Tertiärluftkanal nach Zusammenführung mit dem Drehofenabgaskanal verbrannt, wobei der Restausbrand durch die Strömungsumlenkung der Suspension in der Calcinierstufe noch begünstigt wird.

Während es sich bei der Feuerung im Drehrohrofen um eine Hochtemperaturverbrennung mit langer Brennerflamme handelt, wobei hauptsächlich thermisches NOₓ in das Abgas gelangt, steigt die Temperatur bei der in der Regel flammenlosen Verbrennung in der Calcinierstufe nicht über die Calcinationstemperatur von etwa ca. 850°C, wobei hauptsächlich Brennstoff-NOₓ entsteht. Diese Verbrennungstemperatur/Calcinationstemperatur liegt aber zu niedrig für die Verbrennung reaktionsträger schwer zündbarer bzw. schwer brennbarer Brennstoffe (sogenannte Sekundärbrennstoffe) wie z.B. minderwertige Kohle etc., so daß solche Stoffe bisher im Drehrohrofen selbst verfeuert worden sind, oder nicht bei der Zementklinkererzeugung eingesetzt werden konnten.

Es ist auch bekannt (Fachzeitschrift "World Cement" Oktober 1998, Seiten 83 bis 88), reaktionsträge Sekundärbrennstoffe außerhalb des Drehrohrofens zu verbrennen, und zwar in einem vertikal angeordneten zylindrischen Calcinierreaktor, der von der Suspension von unten nach oben durchströmt wird. Bei dieser Variante, bei welcher das Rohmehl in zwei getrennten Höhenstufen und der Brennstoff unten in den Calcinierreaktor eingeführt werden, arbeitet dieser nach Art eines Wirbelschichtreaktors, zu dessen sicherem Betrieb bei Einsatz eines großstückigen Sekundärbrennstoffes es erforderlich wäre, den Sekundärbrennstoff zu mahlen. Spezielle Maßnahmen zur Erzielung niedriger NOₓ-Emissionen sind nicht getroffen. Bei einer anderen bekannten Variante wird eine vertikal angeordnete zylindrische Calcinier-Brennkammer von der Tertiärluft-Rohmehl-Brennstoff-Suspension von oben nach unten durchströmt. Dabei werden reaktionsträge Brennstoffe eingesetzt. Eine zentrale Flamme, die sich in der Brennkammer von oben nach unten erstreckt, heizt den gesamten Reaktionsraum so auf (z.B. 1000°C), daß die schwer brennbaren Stoffe besser zünden. Abgesehen davon, daß die reaktionsträgen Brennstoffe, insbesondere wenn sie nicht gemahlen sind, rasch mit kurzer Verweilzeit von oben nach unten durch die Brennkammer fallen, so daß sie nicht ausreichend Zeit zum Ausbrand haben, sind auch bei dieser bekannten Calcinieranlage besondere Maßnahmen zur Erzielung einer möglichst schadstoffarmen Verbrennung von Sekundärbrennstoffen außerhalb des Drehrohrofens bei verminderten Emissionen an Schadstoffen, wie insbesondere NOₓ und CO, nicht angesprochen.

Der Erfindung liegt die Aufgabe zugrunde, bei Zementklinkerproduktionslinien der oben beschriebenen Art einen dem Drehrohrofen vorgeschalteten, mit Zweitfeuerungen ausgestatteten Calcinator zu schaffen, in dem reaktionsträge schwer zündbare bzw. schwer verbrennbare Brennstoffe (Sekundärbrennstoffe) nutzbringend zum Zwecke der Calcination des Zementrohmehls durch Verbrennung entsorgt werden können und trotzdem ein Restausbrand von CO-Gassträhnen und noch anderer Brennstoffkomponenten sowie ein Abgas mit niedrigen NOₓ-Emissionen gesichert sind.

Diese Aufgabe wird erfindungsgemäß mit einer Technologie mit den Merkmalen des Kennzeichnungsteils des Anspruchs 1 gelöst. Vorteilhafte Ausgestaltungen der Erfindung sind in den Unteransprüchen angegeben.

Charakteristisch für die erfindungsgemäße Calcinierstufe ist zunächst einmal, daß der vom Klinkerkühler kommende Tertiärluftkanal im Bereich der Calcinierstufe als den Kanalquerschnitt erweiternde, von unten nach oben von der Kühlerabluft-Rohmehl-Brennstoff-Suspension durchströmte Verbrennungskammer ausgebildet ist, an deren unterem Ende die Tertiärluft mit einer Drallkomponente eintritt. An diesem unteren Verbrennungskammerende wird außerdem zentral ein gut zündbarer Brennstoff eingeführt, wobei von dieser Brennstelle in der Verbrennungskammer eine zentral sich von unten nach oben erstreckende Hochtemperaturzone mit heißer Kernflamme ausgeht. In den Flammenraum der Hochtemperaturzone der Verbrennungskammer wird ein reaktionsträger schwer zündbarer bzw. schwer brennbarer Brennstoff (Sekundärbrennstoff) eingeführt, der dort mit Sicherheit zündet und verbrannt und damit entsorgt wird. In den Peripherieraum zwischen dem Flammenraum und der Wandung der Verbrennungskammer wird wenigstens ein Teilstrom des Rohmehls aus der zweituntersten Zyklonstufe des Zyklonschwebegas-Vorwärmersystems eingeführt. In diesem Peripherieraum wird das Rohmehl von der mit Drallkomponente eintretenden Tertiärluft erfaßt und mit dem Tertiärluftstrom in der Verbrennungskammer auf einer Spiralbahn von unten nach oben um den heißen Flammenraum gefördert und dabei hochgradig calciniert. Im Gegensatz zu einer Brennkammer mit einer Stoffströmung von oben nach unten verweilen bei der von unten nach oben gerichteten Suspensionsströmung bei der erfindungsgemäß angeordneten Verbrennungskammer insbesondere die gröberen Teile länger im Reaktionsraum, d. h. die Verweilzeit sowohl für die Verbrennung des Sekundärbrennstoffs im heißen Flammenraum als auch für die Calcination des Rohmehls im Peripherieraum zwischen dem Flammenraum und der Wandung der Verbrennungskammer ist deutlich erhöht, was letztendlich zu einem möglichst vollständigen Restausbrand sowie zu einer hochgradigen Calcination führt. Gleichzeitig wirkt das im Peripherieraum zwischen dem heißen Flammenraum und der Wandung der Verbrennungskammer nach oben pneumatisch auf Spiralbahnen transportierte Feststoffmaterial als Wärmeisolierung und damit als Schutz vor thermischer Überbeanspruchung der Wandung der Verbrennungskammer und gegen Ansätze.

Der mit der von unten nach oben verlaufenden Suspensionsdurchströmung bei der erfindungsgemäßen Verbrennungskammer verbundene Vorteil der langen Verweilzeit in der Verbrennungskammer gilt besonders für die grobstückigen Anteile des in die Verbrennungskammer eingeführten Sekundärbrennstoffs, der vor seiner Einführung nicht fein gemahlen werden muß. Sollten grobstückige Anteile des Sekundärbrennstoffs nach ihrer Einführung in die Verbrennungskammer nach unten durchfallen, so haben diese Gelegenheit, vom unten in die Verbrennungskammer mit Drall eingeführten Tertiärluftstrom erfaßt und auf Spiralbahnen mit langer Verweilzeit nach oben transportiert zu werden. Dabei werden die grobstückigeren Festbrennstoffkomponenten infolge der Fliehkrafteinwirkung mehr an die Peripherie der Kammer gedrängt, wo sie mit langer Verweilzeit zunächst aufgrund einer Entgasung eine CO-haltige Atmosphäre erzeugen, die geeignet ist, den im Abgas enthaltenen Schadstoff NOₓ durch Reduktion zu zersetzen. Darüber hinaus kann der in die Verbrennungskammer eingeführte Sekundärbrennstoff absichtlich unterstöchiometrisch, d. h. mit Sauerstoffunterschuß verbrannt werden zwecks Schaffung einer noch größeren CO-haltigen Reduktionszone zur Reduktion des Schadstoffes NOₓ. Suspensionsströmungsabwärts gesehen wird dann das in der NOₓ-Reduktionszone nicht verbrauchte CO mittels Verbrennungsluft verbrannt, die in Form von Tertiärluft von der vom Klinkerkühler kommenden Tertiärluftleitung abgezweigt und über wenigstens eine Zweigleitung in das Calcinatorabgas eingeführt wird, bevor die strömende Suspension zur Steigerung des Restausbrandes sowie des Calcinationsgrades des Rohmehls im Calcinator umgelenkt wird, wobei im Bereich der Strömungsumlenkung noch zusätzlich eine Wirbelkammer bzw. Mischkammer zur innigen Vermischung der Gas-Rohmehl-Brennstoff-Suspension angeordnet sein kann.

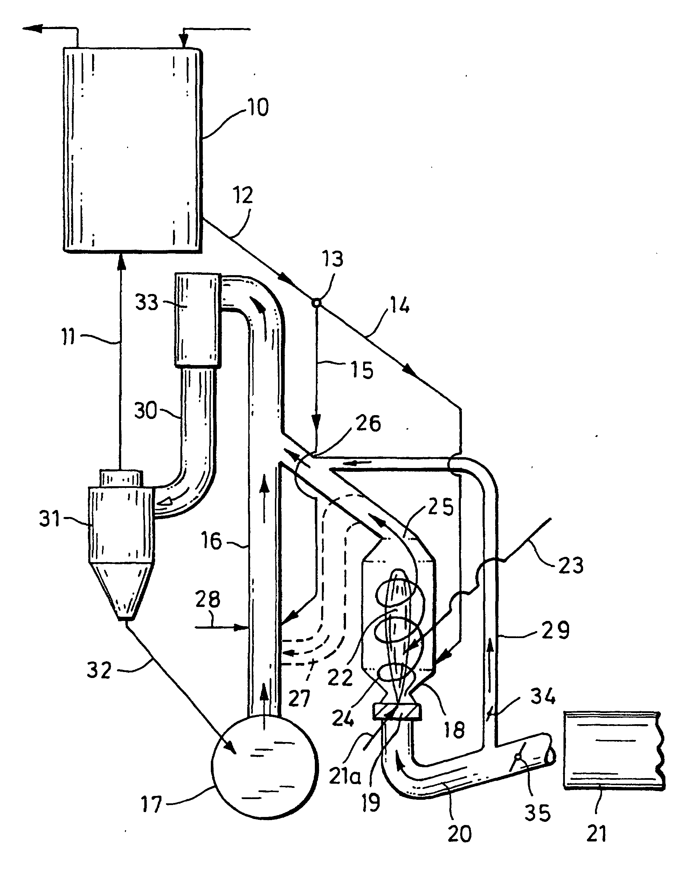

Die Erfindung und deren weitere Merkmale und Vorteile werden anhand des in der Zeichnung schematisch dargestellten Ausführungsbeispieles näher erläutert.

Die Zeichnung zeigt in schematischer Darstellung die Calcinierstufe bzw. den Calcinator einer Anlage zur Herstellung von Zementklinker aus Zementrohmehl, das oben einem Zyklonschwebegas-Vorwärmersystem 10 aufgegeben wird, wo es nacheinander mehrere Zyklonschwebegas-Wärmetauscher im kombinierten Gleich-Gegenstrom zum heißen Abgas 11 der Calcinierstufe durchwandert, um im vorletzten (zweituntersten) Zyklon aus dem Gasstrom 11 ausgeschieden und durch die Zufuhrleitung 12 in der Rohmehlweiche 13 auf die beiden Gutzuführungsleitungen 14 und 15 aufgeteilt zu werden. Das am Zementrohmehl abgekühlte Abgas 11 verläßt nach Durchströmung des obersten Zyklons oben die Vorwärmstufe 10 der Zementklinkerproduktionslinie.

Während die Rohmehlleitung 15 in die Abgassteigleitung bzw. in den Drehofenabgaskanal 16 des Drehrohrofens 17 einmündet, mündet die Rohmehlleitung 14 in eine Verbrennungskammer 18 ein, an deren unteren Eintrittsöffnung 19 eine über eine Tertiärluftleitung 20 vom Klinkerkühler 21 herangeführte heiße Kühlerabluft einströmt. Die Verbrennungskammer hat einen gegenüber der Tertiärluftleitung 20 deutlich erweiterten Querschnitt, und sie wird von unten nach oben von einer Gas-Rohmehl-Brennstoff-Suspension durchströmt. Dazu wird am unteren Ende der Verbrennungskammer 18 im Bereich der Eintrittsöffnung 19, an dem die Tertiärluft mit einer Drallkomponente eintritt, zentral ein gut zündbarer Brennstoff 21a eingeführt, wobei von dieser Brennstelle in der Verbrennungskammer 18 eine zentral sich von unten nach oben erstreckende Hochtemperaturzone mit heißer Kernflamme 22 ausgeht. In den Flammenraum 22 der Hochtemperaturzone der Verbrennungskammer 18 wird ein reaktionsträger schwer zündbarer bzw. schwer brennbarer Brennstoff 23 (Sekundärbrennstoffe) eingeführt, verbrannt und damit nutzbringend entsorgt. Der Rohmehl-Teilstrom 14 wird in den unteren Bereich des Peripherieraums zwischen dem Flammenraum 22 und der Wandung der Verbrennungskammer 18 eingeführt. Daher ergibt sich auch eine vergleichsweise geringe Bauhöhe der erfindungsgemäßen Calcinierkammer bzw. des gesamten Calcinators.

Wie in der Zeichnung schematisch dargestellt wird das Rohmehl 14 von der mit Drall von unten in die Verbrennungskammer 18 eingeführten Tertiärluft infolge der Fliehkräfte an die Kammerperipherie gedrängt und im Peripherieraum zwischen dem Flammenraum 22 und der Kammerwandung mit sehr langer Verweilzeit auf Spiralbahnen 24 pneumatisch von unten nach oben zum oberen Auslaß 25 der Verbrennungskammer gefördert. Auf seinem Spiralbahnweg durch die Verbrennungskammer von unten nach oben wird das Rohmehl 14 hochgradig calciniert, und es schützt gleichzeitig die Wandung der Verbrennungskammer 18 gegen Überhitzungen.

In der Verbrennungskammer 18 wird der gut zündbare Brennstoff 21a überstöchiometrisch mit Sauerstoffüberschuß verbrannt. Auch der reaktionsträge Sekundärbrennstoff 23 kann mit Sauerstoffüberschuß verbrannt werden. Gleichwohl werden wenigstens die gröberen Partikel des Sekundärbrennstoffs 23 an die Peripherie gedrängt, wo sie vergleichsweise langsam entgasen und CO entwickeln, welches für das im Abgas enthaltene NOₓ reduzierend wirkt. Das Verhältnis von Sauerstoff der Tertiärluft 20 zum Sekundärbrennstoff 23 kann aber absichtlich mittels der weiter unten noch beschriebenen Stellorgane 34 bzw. 35 auch so eingestellt werden, daß der Sekundärbrennstoff mit Sauerstoffunterschuß verbrennt zwecks verstärkter Bildung einer CO-haltigen Reduktionszone, die dann noch mehr in der Lage ist, den im Abgas enthaltenen Schadstoff NOₓ durch Zersetzung weitgehend unschädlich zu machen. Sollten grobe Anteile des eingeführten Sekundärbrennstoffs 23 in der Verbrennungskammer 18 nach unten durchfallen, so erfahren gerade diese in der Verbrennungskammer eine lange Verweilzeit, weil sie von dem von unten mit Drall eingeführten Tertiärluftstrom erfaßt und erneut nach oben durch pneumatische Förderung mitgenommen werden.

Der Auslaß 25 der Verbrennungskammer 18 ist über eine schräg nach oben geneigte Leitung 26 oder alternativ dazu über einen nach unten geneigten gestrichelt gezeichneten Rohrleitungsbogen 27 an den mit dem Rohmehl-Teilstrom 15 sowie mit Brennstoff 28 versorgten Drehofenabgaskanal 16 angeschlossen. Auch der in dieser Brennstelle des Drehofenabgaskanals 16 eingesetzte Brennstoff 28 kann unterstöchiometrisch mit Sauerstoffunterschuß verbrannt werden zwecks Bildung einer CO-haltigen Reduktionszone bzw. CO-Gassträhne zur Reduktion des im Drehofenabgas enthaltenen Schadstoffes NOₓ. Strömungsabwärts von der Verbrennungskammer 18 sowie der Brennstelle 28 im Drehofenabgaskanal gesehen mündet in den Tertiärluftkanal/Drehofenabgaskanal Verbrennungsluft ein, die über wenigstens eine Zweigleitung 29 von der vom Klinkerkühler 21 kommenden Tertiärluftleitung 20 abgezweigt ist.

Wie aus der Zeichnung noch hervorgeht, kann in der Calcinierstufe im Bereich der Umlenkung vom aufsteigenden Drehofenabgaskanal 16 um etwa 180° in den absteigenden Rohrleitungsast 30, der in den untersten Zyklon 31 zur Abtrennung des hochgradig calcinierten Zementrohmehls 32 vom Abgasstrom 11 führt, noch eine Wirbelkammer bzw. Mischkammer 33 zur innigen Vermischung der Gas-Rohmehl-Brennstoff-Suspension angeordnet sein, wodurch der Restausbrand etwa noch vorhandener CO-Gassträhnen sowie ggf. noch vorhandener anderer Brennstoffkomponenten mit Sicherheit gewährleistet ist. Die Mischkammer 33 kann einen tangentialen Eintritt und einen tangentialen Austritt aufweisen; sie kann aber auch einen oberen tangentialen Suspensionseintritt sowie eine zentrale untere Austragsöffnung aufweisen.

Zur Steuerung der Aufteilung der Tertiärluft 20 auf die Verbrennungskammer 18 sowie auf die Abzweigleitung 29 im gewünschten Verhältnis können noch in den Leitungen 20 bzw. 29 Stellglieder wie Klappen 34 bzw. Schieber 35 etc. angeordnet sein. Dabei kann von der Tertiärluft über Leitung 29 eine solche Luftmenge zum Restausbrand abgezweigt sein, daß der Brennstoff, der in der Verbrennungskammer 18 bei nicht abgezweigter Tertiärluft mit Sauerstoffüberschuß verbrennen würde, bei abgezweigter Tertiärluft mit Sauerstoffunterschuß verbrennt.

## Patentansprüche

1. Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (17) (Drehofen) und ein Abluftstrom (Tertiärluft) der Kühlstufe (21) (Klinkerkühler) in der Weise in der Calcinierstufe zur Calcination des Rohmehls (12) genutzt werden, daß sowohl im Drehofenabgaskanal (16) als auch im Tertiärluftkanal (20) wenigstens eine Brennstelle vorhanden ist, wobei die aus beiden Kanälen kommende Gas-Rohmehl-Brennstoff-Suspension in der Calcinierstufe umgelenkt und in den untersten Zyklon (31) des Zyklonschwebegas-Vorwärmersystems (10) zwecks Abtrennung des calcinierten Rohmehls (32) vom Gasstrom (11) eingeführt wird, **gekennzeichnet durch** folgende Merkmale:
a) der Tertiärluftkanal (20) ist im Bereich der Calcinierstufe als den Kanalquerschnitt erweiternde, von unten nach oben von der Suspension durchströmte Verbrennungskammer (18) ausgebildet,
b) am unteren Ende der Verbrennungskammer (18), an dem die Tertiärluft mit Drallkomponente eintritt, wird zentral ein gut zündbarer Brennstoff (21a) eingeführt, wobei von dieser Brennstelle in der Verbrennungskammer (18) eine zentral sich von unten nach oben erstreckende Hochtemperaturzone mit heißer Kernflamme (22) ausgeht,
c) in den Flammenraum (22) der Hochtemperaturzone der Verbrennungskammer (18) wird ein reaktionsträger schwer zündbarer bzw. schwer brennbarer Brennstoff (23) (Sekundärbrennstoff) eingeführt und verbrannt,
d) in den Peripherieraum zwischen dem Flammenraum (22) und der Wandung der Verbrennungskammer (18) wird wenigstens ein Teilstrom (14) des Rohmehls aus der zweituntersten Zyklonstufe des Zyklonschwebegas-Vorwärmersystems (10) eingeführt.

2. Anlage nach Anspruch 1,
**dadurch gekennzeichnet, daß** der Auslaß (25) der Verbrennungskammer (18) über eine schräg nach oben geneigte Leitung (26) oder über einen nach unten geneigten Rohrleitungsbogen (27) an den mit Brennstoff (28) und wenigstens einem Rohmehl-Teilstrom (15) versorgten Drehofenabgaskanal (16) angeschlossen ist.

3. Anlage nach den Ansprüchen 1 oder 2,
**dadurch gekennzeichnet, daß** der in der Verbrennungskammer (18) des Tertiärluftkanals eingesetzte Sekundärbrennstoff (23) und/oder der in der Brennstelle des Drehofenabgaskanals (16) eingesetzte Brennstoff (28) unterstöchiometrisch mit Sauerstoffunterschuß verbrannt werden.

4. Anlage nach den Ansprüchen 1 bis 3,
**dadurch gekennzeichnet, daß** strömungsabwärts von der Verbrennungskammer (18) sowie der Brennstelle (28) im Drehofenabgaskanal (16) gesehen in den Tertiärluftkanal/Drehofenabgaskanal Verbrennungsluft einmündet, die über wenigstens eine Zweigleitung (29) von der vom Klinkerkühler (21) kommenden Tertiärluftleitung (20) abgezweigt ist.

5. Anlage nach einem oder mehreren der Ansprüche 1 bis 4,
**dadurch gekennzeichnet, daß** in der Calcinierstufe im Bereich ihrer Strömungsumlenkung eine Wirbelkammer bzw. Mischkammer (33) zur innigen Vermischung der Gas-Rohmehl-Brennstoff-Suspension angeordnet ist.

## Claims

1. Installation for the heat treatment of raw materials in meal form, in particular during the production of cement clinker from raw material, in which the raw meal is heat-treated in a combustion process by preheating, calcining, sintering and cooling, and the exhaust-gas stream from the sintering stage (17) (rotary kiln) and an outgoing-air stream (tertiary air) from the cooling stage (21) (clinker cooler) is utilized in the calcining stage for calcining the raw meal (12) in such a way that at least one combustion location is present both in the rotary kiln exhaust-gas duct (16) and in the tertiary air duct (20), the gas/raw meal/fuel suspension which comes out of the two ducts being diverted in the calcining stage and introduced into the bottom cyclone (31) of the cyclone suspension preheater system (10) in order for the calcined raw meal (32) to be separated from the gas stream (11), **characterized by** the following features:
a) the tertiary air duct (20) is formed, in the region of the calcining stage, as a combustion chamber (18) which widens the duct cross section and through which the suspension flows from the bottom upwards,
b) a readily ignitable fuel (21a) is introduced centrally at the lower end of the combustion chamber (18), at which the tertiary air with a swirling component enters, with a high-temperature zone which extends centrally from the bottom upwards and has a hot core flame (22) starting from this combustion location in the combustion chamber (18),
c) a relatively unreactive fuel (23), which is difficult to ignite and/or burn (secondary fuel), is introduced into the flame space (22) of the high-temperature zone of the combustion chamber (18) and burnt,
d) at least one partial stream (14) of the raw meal from the second-bottom cyclone stage of the cyclone suspension preheater system (10) is introduced into the peripheral space between the flame space (22) and the wall of the combustion chamber (18).

2. Installation according to Claim 1, **characterized in that** the outlet (25) of the combustion chamber (18) is connected, via a line (26) which is inclined obliquely upwards or via a pipe elbow (27) which is inclined downwards, to the rotary kiln exhaust-gas duct (16) which is supplied with fuel (28) and at least one raw meal part-stream (15).

3. Installation according to Claim 1 or 2, **characterized in that** the secondary fuel (23) which is used in the combustion chamber (18) of the tertiary air duct and/or the fuel (28) which is used in the combustion location of the rotary kiln exhaust-gas duct (16) is burnt under substoichiometric conditions with a deficit of oxygen.

4. Installation according to Claims 1 to 3, **characterized in that** combustion air which has been branched off from the tertiary air line (20) leading from the clinker cooler (21) via at least one branch line (29) opens out into the tertiary air duct/rotary kiln exhaust-gas duct downstream of the combustion chamber (18) and of the combustion location (28) in the rotary kiln exhaust-gas duct (16).

5. Installation according to one or more of Claims 1 to 4, **characterized in that** a fluidization chamber or mixing chamber (33) for intimate mixing of the gas/raw meal/fuel suspension is arranged in the calcining stage, in the region of its flow diversion.

## Revendications

1. Installation en vue du traitement thermique de matières brutes farineuses, en particulier, lors de la fabrication de clinker de ciment provenant de farine crue, la farine crue subissant un traitement thermique dans un processus de combustion par chauffage préalable, calcination, frittage et refroidissement et le courant de gaz de rejet de l'étape de frittage (17) (four rotatif) et un courant d'air de rejet (air tertiaire) de l'étape de refroidissement (21) (refroidisseur de clinker) étant utilisés dans l'étape de calcination en vue de la calcination de la farine crue (12), de telle manière que soit présent, non seulement dans le canal de gaz de rejet du four rotatif (16), mais aussi dans le canal d'air tertiaire (20), au moins un point de combustion, la suspension gaz - farine crue - combustible provenant des deux canaux étant déviée dans l'étape de calcination et étant introduite dans le cyclone le plus inférieur (31) du système de chauffage préalable à gaz de suspension du cyclone (10) en vue de la séparation de la farine crue calcinée (32) du courant gazeux (11), **caractérisée par** les caractéristiques suivantes selon lesquelles :
a) le canal d'air tertiaire (20) est formé dans le domaine de l'étape de calcination en tant que chambre de combustion (18), traversée de bas en haut par la suspension, élargissant la section transversale de canal,
b) on introduit, à l'extrémité inférieure de la chambre de combustion (18), à l'aide de laquelle l'air tertiaire pénètre avec des composants de giration, d'une manière centrale, un combustible bien inflammable (21), une zone à hautes températures, s'étirant de bas en haut avec une flamme de coeur chaude (22), émergeant de ce point de combustion dans la chambre de combustion (18),
c) on introduit et on brûle, dans l'espace de flammes (22) de la zone à hautes températures de la chambre de combustion (18), un combustible difficilement inflammable ou difficilement brûlable, peu enclin à réagir (23) (combustible secondaire),
d) on introduit, dans l'espace périphérique entre l'espace de flammes (22) et la paroi de la chambre de combustion (18), au moins un courant partiel (14) de la farine crue en provenance de l'étape de cyclone du deuxième niveau des niveaux les plus inférieurs du système d'échauffement préalable à gaz de suspension du cyclone (10).

2. Installation selon la revendication 1, **caractérisée en ce que** l'évacuation (25) de la chambre de combustion (18) est raccordée par l'intermédiaire d'un conduit incliné obliquement vers le haut (26) ou d'un coude de conduit incliné vers le bas (27), au canal de gaz de rejet du four rotatif (16), alimenté à l'aide du combustible (28) et à l'aide d'au moins un courant partiel de farine crue (15).

3. Installation selon la revendication 1 ou 2, **caractérisée en ce que** le combustible secondaire (23), utilisé dans la chambre de combustion (18) du canal d'air tertiaire, et/ou le combustible (28), utilisé dans le point de combustion du canal de gaz de rejet du four rotatif (16), sont brûlés d'une manière sous-stoechiométrique avec un déficit d'oxygène.

4. Installation selon les revendications 1 à 3, **caractérisée en ce qu'**en amont par rapport à la chambre de combustion (18) ainsi que par rapport au point de combustion (28) dans le canal de gaz de rejet du four rotatif (16), dans le canal d'air tertiaire/dans le canal de gaz de rejet du four rotatif, débouche l'air de combustion, qui est dévié, par l'intermédiaire d'au moins un conduit de dérivation (29), hors de la conduite d'air tertiaire (20) provenant du refroidisseur de clinker (21).

5. Installation selon l'une quelconque des revendications 1 à 4, **caractérisée en ce que**, lors de l'étape de calcination, on dispose, dans le domaine de sa déviation d'écoulement, une chambre de turbulence ou une chambre de mélange (33), en vue du mélange intime de la suspension combustible - farine crue - gaz.
